# EUROPEAN PATENT APPLICATION

(11) **EP 1 178 446 A1**
(43) Date of publication of application: **06.02.2002**
(21) Application number: 00830548.4
(22) Date of filing: 31.07.2000
(51) Int. Cl.: G07F 7/10

(54) **Communication system using memory cards, and related communication method**

(71) Applicant: Flamini, Marco, 00040 Castelluccia Marino (RM) (IT)
(72) Inventor: Flamini, Marco, 00040 Castelluccia Marino (RM) (IT)
(74) Representative: Robba, Pierpaolo

(57) **Abstract**

A communication system using memory cards (5), in particular smart cards, comprises a communication network (1) to which card readers (2a...2n; 20) and servers (3a...3m) are connected and allow access of the card owners to certain services. Each card reader (2a...2n; 20) is associated with an own identification code and the servers (3a...3m) allow a card owner to receive a service only upon the joint recognition of said identification code of the reader and of an identification code of the card.

## Description

The present invention relates to communication systems, and more particularly it concerns a communication system using memory cards. Preferably, said memory cards are smart cards, i.e. cards equipped with an integrated data processing circuit.

Memory cards are being used since a long time for a wide number of aims: telephone card, credit card or bank card in general, cards for signalling the presence at the workplace, and so on. In case of smart cards, new applications are being proposed which allow the cards to play a more active role, in order to fully exploit the capabilities of their processing units: in particular, the trend is towards multi-function cards, which act at the same time as personal identification document, memory device for storing personal, health, bank, tax and other data concerning the owner, electronic payment device, etc.

The creation of "information technology islands" can be envisaged, and by using such islands the card owner may access the public administration services, financial services etc. The card will be both the means for enabling access to a service, and the carrier of information, if any, required to receive the service (e.g. personal data for requesting certificates, patient's case history for medical services...),

All such applications entail an information exchange with remote service management units ("servers") through a communication network. Safety and privacy problems related with use both of cards such as bank cards and of communication networks are well known. Such problems will become serious and serious as the amount of information stored onto the cards and the number of services attainable through the cards increase. Some problems can be solved by using terminals capable of establishing encrypted communications with the servers. A further degree of safety can be obtained by using a card as a means for enabling network access, as disclosed for instance in WO-A 00/07339, WO-A 00/010139 or EP-A 0 989 529. Yet such solutions do not solve the problem of the proper use of the card, that is the problem of checking that the person using the card is empowered to do so and is doing so for the aims of his/her duty. In other words, situations exist in which a univocal identification is required of the authorisations associated with both the card and the terminal using the card. By way of example, we may mention the use of a card for enabling access to information related to a given filed of activity of a company: the company rules may impose not only that predetermined people (the card owners) only are authorised to access the information, but also that each card can enable access only through predetermined terminals.

Such a check is impossible if the network through which the card-server communication takes place does not provide for a univocal identification of the terminals connected thereto: this is at present the case of Local Area Networks or of networks like Internet, which at present are the most widely used networks.

It is an object of the invention to provide a system and a method of communication between memory cards, in particular smart cards, and servers, which solve the identification problems discussed above.

According to a first aspect of the invention, there is provided a communication system comprising a communication network to which a plurality of card readers and a plurality of servers are connected, wherein, in case of a network that does not provide for a univocal addressing of terminals connected thereto, each card reader comprises means for storing an own identification code, and said server includes first recognising and enabling means for enabling access to a managed service only upon the joint recognition of said identification code of the terminal and of an identification code of the card, stored on the card itself.

According to a second aspect of the invention, there is provided a communication method wherein memory card readers can communicate with servers through a communication network to request access to a service, and wherein said cards are each associated with an identification code, characterised in that, in a step preceding a service access request, an identification code univocal for each card reader is stored into each reader and in that, when a card reader requests access to a service, the reader and the card are requested the respective identification codes by the server and the access to the service is enabled only upon recognition of both codes as codes being authorised to the access.

For a better understanding reference is made to the accompanying drawings, which show a preferred embodiment of the invention, given by way of non limiting example, and in which:
- Fig. 1 is a general diagram of a communication system in accordance with the invention;
- Fig. 2 is a block diagram of a memory card reader;
- Figs. 3 to 5 are flow charts of a communication method using the system shown in Fig. 1; and
- Fig. 6 is a block diagram of an application using a card reader operating with two cards.

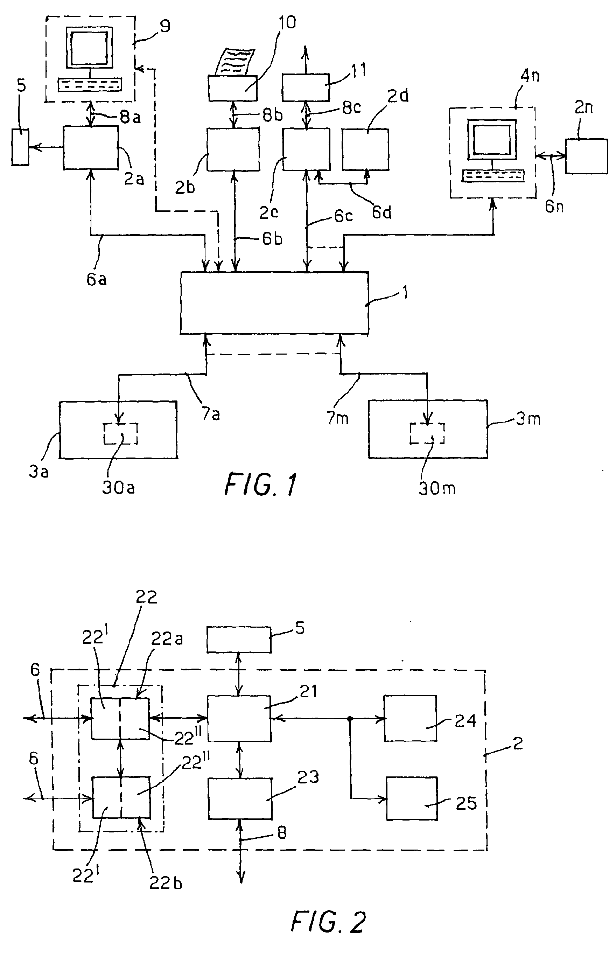

As shown in Fig. 1, a general diagram of a communication system in accordance with the present invention comprises a communication network 1 to which a plurality of card readers 2a...2n are connected. Through network 1, readers 2 can communicate with service management units ("servers") which in turn allow the card owners to avail themselves of a plurality of services or applications which can be accessed through network 1. Different modalities of connection between readers 2 and network 1 are possible: e. g. some readers, like readers 2a...2c, can be directly connected to network 1, in parallel to one another; other readers. like readers 2c, 2d, are connected in series; further readers, like reader 2n, are connected to the network through a controller 4, for instance a personal computer. For applications where safety is an essential feature, the solutions dispensing with the presence of external controllers are preferred, since such controllers would more readily permit undesired manipulation of the information. Reference numeral 5 denotes a card, generally a smart card, that in the drawing is associated with reader 2a; reference numerals 6 (6a...6n) denote lines connecting readers 2 to network 1 (in case of readers directly connected) or the devices through which the readers access the network; reference numerals 7 (7a...7m) denote lines connecting servers 3a...3m to the network.

Readers 2 are moreover connected through lines 8 (8a, 8b, 8c...) to devices utilising the information related with the service or application to which card 5 and the reader associated thereto give access. Such information could even be the information stored on the card. The nature of such devices depend on the particular field of use of card 5: for instance, such devices could be a personal computer 9 where card 5 enables access to network 1 or execution of local processing (as shown for reader 2a), or a printer 10 (reader 2b) or yet a driver 11 such as a device controlling door opening, etc. The structure of the overall system is a client-server structure, where the individual readers act as the clients.

The network characteristics, as far as the information transport medium (physical line, radio link...) and the communication protocol (Ethernet, TCP/IP...) are concerned, are not of interest for the invention. The essential requirements are that each reader has associated thereto an identification code and that, for exploitation by the reader or the utilisation device of the information related with a service or an application, recognition of the identity of a card 5 (and hence of the user to which the card is assigned) by a server 3 is not sufficient, but recognition also of the identity of the concerned reader 2 by the server is necessary. In particular, identification of card 3 is made possible by the identification of reader 2. Thus, servers 3a...3m should comprise means, shown by dashed lines block 30a...30m, for recognising the codes mentioned above and for enabling use of the service.

Fig. 2 shows the block diagram of a card reader 2. Reader 2 comprises: a slot (not shown) for card 5, which slot is advantageously arranged to receive cards conforming to different standards (e.g. ISO 7816, EMV, CP8); a microprocessor 21; a first input-output interface 22 for connection to lines 6; a second input-output interface 22 for connection to lines 8, in particular an RS232 serial interface; a keyboard 24; a display 25. Taking into account that the readers can be serially connected, as shown for readers 2c, 2d in Fig. 1, interface 22 will consist of two units 22a, 22b, connected together and associated each to a line 6. Units 22a, 22b will comprise moreover a part 22' for connection to the network and depending therefore on the network characteristics, and a part 22" for connection to microprocessor 21 and independent of the network. In case of an Ethernet network, interface 22 is e.g. a double-port 10/100base-T interface or an RJ45 interface.

Advantageously, identification code of reader 2 is stored in microprocessor 21, in the program memory. Preferably, said code is univocally associated with the particular specimen of operating system that has been installed into the reader, and therefore it will be stored together with the operating system when the latter is loaded at the factory. Dialogue protocols between a reader 2 and a server 3, at the Data Link Layer level, are similar to the dialogue protocols between conventional readers and their controllers, and entail exchange of messages comprising a header, a variable-length information field and a control field (see e.g. Preliminary Application Note AN 99048 concerning TDA8007B & P8XC51RB+ reader of Philips Semiconductors). Yet, according to the invention, the message header is lengthened so as to include additional bytes containing the address (or identification code) of the reader concerned by a message. In a preferred embodiment of the invention, a 4-byte address has been used (hence, 2³² readers can be connected to the network, such number being largely sufficient for controlled access networks like those where the invention should find application). The header lengthening entails of course a decrease in the maximum number of bytes in the message information field (256 bytes in the known device) if the messages must have a pre-set maximum length: yet a decrease from 256 to 252 information bytes is not a serious limitation.

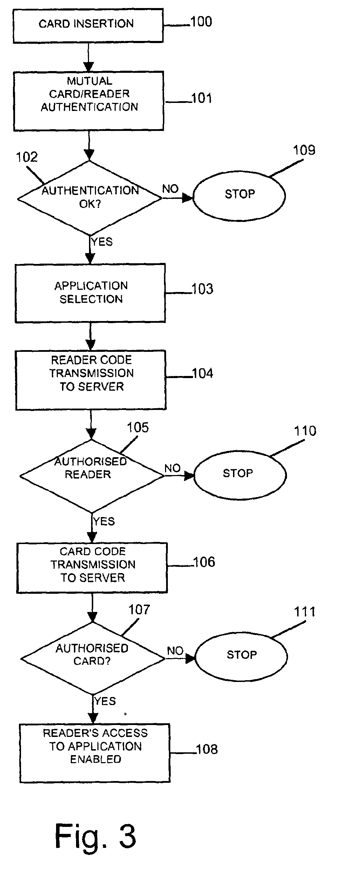

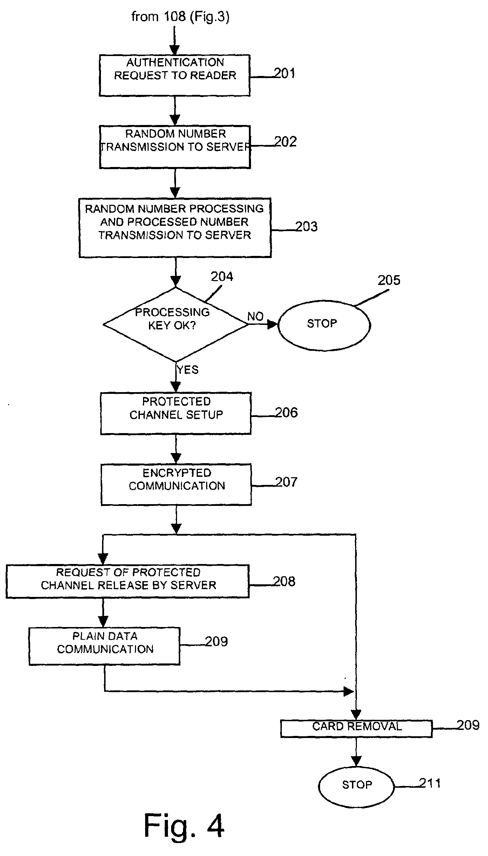

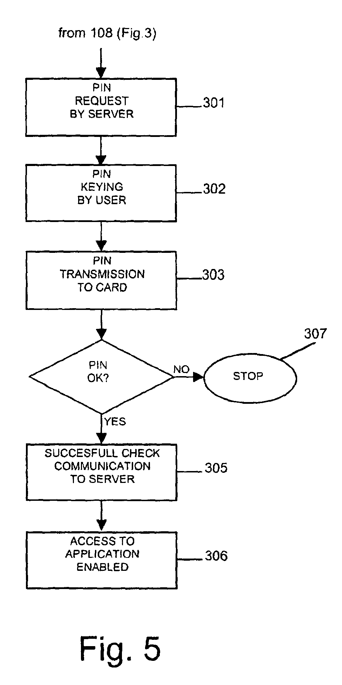

Figs. 3 to 5 show flow charts of a communication method using the system according to the invention.

The first step (100) is the card insertion into the slot of reader 2 so as to predispose it for operation, and it is followed (101) by a step of mutual authentication of the card and the reader. This step is provided for in all readers and is known as SAM (Secure Access Module). In case the mutual authentication is successful (check 102), reader 2 can become connected to the server associated with the requested service (step 103) and can send its identification code to the server (step 104). The dialogue takes place like the dialogue between a reader and its controller: server 3 sends a request message and reader 2 answers. If the reader identity is recognised as being one of the identities authorised to access the requested service (positive result of step 105), the card identification code (that is, the card owner's identity) stored in the same card is communicated to the server (step 106). Like at step 104, the server requests the code to the card, and the card answers. If the card is authorised to operate with that reader (successful result of step 107), the access to the requested application is enabled (that is, the user's PC obtains access to the network, or the card can communicate information stored therein to the server, etc). In case of negative result of any of the checks performed at steps 102, 105, 107), the process is stopped (steps 109, 110, 111). At each step, an information message concerning the step result could be displayed.

The subsequent development of the operations depends on the application. By way of example, the flow charts in Figs 4 and 5 depict the case in which an encrypted communication between the reader and the server is desired and the case in which card operation requires keying of a personal identification number by the user, respectively.

In Fig. 4, starting from final step 108 in Fig. 3, upon detecting the need of an encrypted communication, the server requests an authentication to reader 2 (step 201). At step 202, the reader answers by creating a random number and sending it to the server, which processes the number by a suitable key and sends the processed number back to the reader (step 203). The reader checks (step 204) that the processing has taken place with the correct key and, in the affirmative, sets up the protected communication channel, for instance a channel of the kind using encryption algorithms like the DES (Data Encryption System) or the triple DES or yet the SSL (Secure Socket Layer) (step 206). The protected communication (step 207) goes on until the server requests that normal communication is resumed (steps 208, 209) or the card is removed (step 210). Of course, card removal stops any communication.

In Fig. 5, starting again from final step 108 in Fig. 3, when the server recognises, from its management information, that the card must be used only jointly with a Personal Identification Number (PIN), the server sends the reader the corresponding request command (step 301), which is displayed. The user keys the number (step 302) which is sent directly to the card (step 303). The card checks the PIN (step 304) and, if the check is successful, communicates the successful result to the server (step 305), which consequently enables the access to the application (step 306). An additional safety feature is here provided, in that the PIN is not sent over the network (as in the case of the bank cards), but is used only internally of the reader.

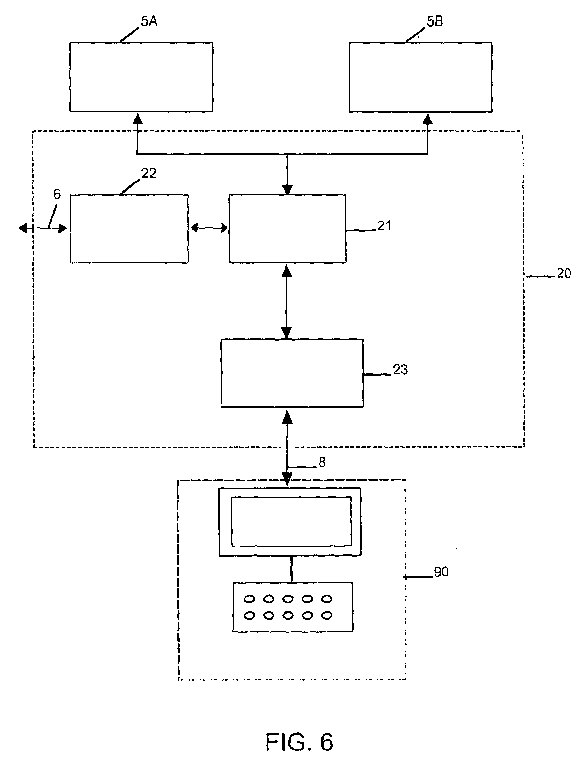

Fig. 6 schematically shows the use of a reader 2 as a gateway for the access to an application by an utilisation device, schematised by a personal computer 90 that is assumed to be a PC intended to locally operate on the data stored on a card. For sake of simplicity of the drawing, in reader 20 the keyboard and the display are not shown and network interface 22 is shown as a single block. In such application the reader must be capable of operating with two cards 5A, 5B: one card, e.g. card 5A, is a master card and the other card 5B is a slave card, the use of which is possible, according to the invention, only upon recognition of the reader and the master card through the procedure described above with reference to Fig. 3. An example of application can be in the medical field. Slave card 5B can be the medical card of a patient and store the patient's medical history, and master card 5A can be the doctor's card: only after server 3 has recognised that the access requests has been made by the doctor, the latter can access the patient's medical information. According to the invention, the terminal and card identification procedure can be repeated also for slave card 5B. Also the procedure concerning slave card 5B may be carried out by using the server. Yet, if the application demands only local use of the data of card 5B, such a procedure can be entrusted to utilisation device 90 and can take place locally through serial line 8. In such case, once the master card 5A has been identified, step 108 in Fig. 3 will entail switching of the connections within reader 20 by the server, so that the reader and the card can dialogue with device 90. In an application of this kind, assuming that interface 23 is an RS232 interface, the signals present at pins RI, DTR can be used to power device 90 on and to signal the presence of card 5B.

It is evident that the above description is given by way of non limiting example, and that variants and modifications are possible without departing from the scope of the invention.

## Claims

1. A communication system using memory cards, said system comprising a communication network (1) to which a plurality of card readers (2a...2n; 20) and a plurality of servers (3a...3m) are connected, wherein a reader (2a...2n; 20) can communicate with a server (3a...3m) through the network (1) upon insertion of a card (5; 5A, 5B), **characterised in that**, in case of a network (1) that does not provide for a univocal addressing of terminals connected thereto, each card reader (2a...2n; 20) comprises means (21) for storing an own identification code, and said server (3a...3m) includes first recognising and enabling means (30a...30m) for enabling access to a managed service only upon the joint recognition of said identification code of the terminal and of an identification code of said card (5; 5A, 5B), stored on the card itself.

2. A communication system as claimed in claim 1, **characterised in that** said means (21) storing the identification code of the reader (2a...2n; 20) are the program memory of a processing unit of the reader (2a...2n; 20).

3. A communication system as claimed in claim 2, **characterised in that** said identification code is associated with the specimen of the operating system loaded into said reader (2a...2n; 20).

4. A communication system as claimed in any preceding claim, **characterised in that** said first recognising and enabling means (30a...30m), upon recognition of said codes, are arranged to set up a protected communication channel between a reader (2a...2n; 20) and the server (3a...3m).

5. A communication system as claimed in any preceding claim, wherein said card (5; 5A, 5B) requires, for being used, the keying of a personal identification number of the owner, **characterised in that**: said server (3a...3m) is arranged to request keying of said personal identification number upon recognition of said identification codes by said first recognising and enabling means (30a...30m); said card (5; 5A, 5B) includes means for receiving, checking and recognising said number and communicating the occurred recognition to said first recognising and enabling means (30a...30m); and said first recognising and enabling means (30a...30m) are arranged to enable the access to the service after said receiving, checking and recognising means in said card (5; 5A, 5B) have communicated the occurred recognition of said personal identification number to said first recognising and enabling means (30a...30m).

6. A communication system as claimed in any preceding claim, **characterised in that** at least one of said readers (20) is a reader arranged to operate with two memory cards (5A, 5B) one of which (5A) is a master card and the other (5B) is a card slaved to the first one and associated with the service, and said first recognising and enabling means (30a...30m) are arranged to enable the reader (20) to operate with the second card (5B) only upon the joint recognition of said identification code of the reader (20) and of an identification code of the master card (5A).

7. A communication system as claimed in any preceding claim, **characterised in that** said first recognising and enabling means (30a...30m) are arranged to enable the access to the service upon the joint recognition of said identification code of the reader (20) and of an identification code of the second card (5B).

8. A communication system as claimed in claim 6, **characterised in that** said reader (20) is connected to a local device (90) for the utilisation and processing of service-related information, and **in that** said local device (90) comprises second recognising and enabling means for enabling the utilisation and processing of said information by said local device (90) only upon the joint recognition of said identification code of the reader (20) and of an identification code of the second card, said second enabling means being activated by said first enabling means (30a...30m)

9. A communication method using memory cards (5; 5A, 5B) and readers (2a...2n; 20) of said cards, which reader are connected to a communication network through which they can communicate with servers (3a...3m) to request access to a service upon insertion of a card (5; 5A) associated with an identification code, **characterised in that**, in a step preceding a service access request, an identification code univocal for each card reader (2a...2n; 20) the is stored in each card reader (2a...2n; 20), and **in that**, when a card reader (2a...2n; 20) requests access to a service, the reader (2a...2n; 20) and the card (5, 5A) are requested the respective identification codes by the server (3a...3m) and the access to the service is enabled only upon recognition of both said codes as codes authorised to the access.

10. A method as claimed in claim 9, **characterised in that** said reader identification code is stored into said reader in a loading step of the programs of the reader itself, and is associated with the specimen of operating system loaded into said reader.

11. A method as claimed in claim 9 or 10, **characterised in that** said request for the card code is done only upon recognition of the reader code.

12. A method as claimed in any of claims 9 to 11, **characterised in that**, upon recognition of both said codes as codes authorised to the access, a communication over a protected channel is set up between the reader (2a...2n; 20) and the server (3a...3m), upon request of the latter.

13. A method as claimed in any of claims 9 to 12, **characterised in that**, to operate with said card (5; 5A, 5B), after recognition of said codes as codes authorised to the access, the keying on the reader (2a...2n; 20) of a personal identification number of the card owner is requested by said server (3a...3m), and **in that** said personal identification number is sent from the reader to the card for being checked and, in case the check has been successful, said card communicates this to said server (3a...3m), the access to the service being enabled upon reception of said communication at said server (3a...3m).

14. A method as claimed in any of claims 9 to 13, **characterised in that** said steps of requesting the identifying codes of the reader (20) and of the card are performed by the server for a master card (5A), and recognition of said codes as codes authorised to the access enables the reader to operate on a slave card (5B) associated with the service.

15. A method as claimed in claim 14, **characterised in that** said steps of requesting the identifying codes of the reader (20) and of the card are repeated by the server for the slave card, and the access to the service is enabled only upon recognition of the codes of the reader (20) and the slave card (5B) as authorised codes.

16. A method as claimed in claim 14, **characterised in that**, after recognition of the identifying codes of the reader (20) and the master card (5B) as authorised codes, said steps of requesting the identifying codes of the reader (20) and of the card are repeated for the slave card (5B) by a local device (90) for the utilisation and processing of service-related information, which device is put into communication with the reader (20) upon command of said server (3a...3m).

17. A method as claimed in any of claims 9 to 16, **characterised in that** the communication between said readers (2a..2n; 20) and said servers (3a..3m) or said local devices (90) takes place by means of messages comprising a header, an information field, and a control field, and **in that** said header includes a field for the insertion of said identification code of the reader (2a...2n; 20) or of the card (5; 5A, 5B).
